# EUROPÄISCHE PATENTANMELDUNG

(11) **EP 4 613 557 A1**
(43) Veröffentlichungstag der Anmeldung: **10.09.2025**
(21) Anmeldenummer: 25154979.6
(22) Anmeldetag: 30.01.2025
(51) Int. Cl.: B60Q 1/24

(54) **BELEUCHTUNGSSYSTEM FÜR LANDWIRTSCHAFTLICHE FAHRZEUGE**

(30) Priorität: 05.03.2024 DE 102024106234
(71) Anmelder: CLAAS Selbstfahrende Erntemaschinen GmbH, 33428 Harsewinkel (DE)
(72) Erfinder: Neitemeier, Dennis, 59510 Lippetal (DE); Belau, Sven Carsten, 33332 Gütersloh (DE); Bönig Dr., Ingo, 33330 Gütersloh (DE); Brune, Markus, 33428 Harsewinkel (DE); Klein Helmkamp, Marwin, Osnabrück (DE); Hinz, Patrick, 33428 Greffen (DE)
(74) Vertreter: Budach, Steffen

(57) **Zusammenfassung**

Ein Beleuchtungssystem für landwirtschaftliche Fahrzeuge umfasst eine Steuereinheit (11) und von der Steuereinheit (11) steuerbare Leuchtmittel (3, 4, 5, 18, 19, 21), von denen sich erste Leuchtmittel (3, 4, 5) an Bord wenigstens eines der landwirtschaftlichen Fahrzeuge, als erstes Fahrzeug (1) bezeichnet, befinden. Die Steuereinheit (11) ist eingerichtet, die Leuchtmittel (3, 4, 5, 18, 19, 21) zu steuern, um ein zur Durchführung einer dem ersten Fahrzeug zugewiesenen Aufgabe angemessenes Umfeld (6) des ersten Fahrzeugs (1) auszuleuchten, das relativ zum ersten Fahrzeug (1) im Wesentlichen stationär ist. Die Steuereinheit (11) ist ferner eingerichtet, das Eindringen wenigstens eines anderen landwirtschaftlichen Fahrzeugs, als zweites Fahrzeug (14) bezeichnet, in das Umfeld (6) zu erfassen und die die Ausleuchtung eines Teils (15) des Umfeldes (6) durch die ersten Leuchtmittel (3, 4, 5) so anzupassen, dass eine Blendung an Bord des zweiten Fahrzeugs (14) vermieden wird.

## Beschreibung

Die vorliegende Erfindung betrifft ein Beleuchtungssystem für landwirtschaftliche Fahrzeuge mit einer Steuereinheit und von der Steuereinheit steuerbaren Leuchtmitteln, von denen sich erste Leuchtmittel an Bord wenigstens eines der landwirtschaftlichen Fahrzeuge, als erstes Fahrzeug bezeichnet, befinden, wobei die Steuereinheit eingerichtet ist, die Leuchtmittel zu steuern, um ein zur Durchführung einer dem ersten Fahrzeug zugewiesenen Aufgabe angemessenes Umfeld des ersten Fahrzeugs auszuleuchten. Ein solches Beleuchtungssystem ist aus DE 10 2017 205 467 A1 bekannt.

In diesem herkömmlichen Beleuchtungssystem ist vorgesehen, die Blickrichtung des Fahrers eines ersten Fahrzeugs zu erfassen und das Licht von Leuchtmitteln des Fahrzeugs in diese Blickrichtung zu steuern. Indem somit immer dahin geleuchtet wird, wo der Fahrer hinblickt, kann zwar dem Fahrer das Erkennen von Details in interessierenden Teilen des Umfelds des Fahrzeugs erleichtert werden; indem aber solche Teile des Umfelds, in die der Fahrer nicht blickt, im Dunkeln bleiben, wird es dem Fahrer erschwert zu erkennen, welche Teile des Umfeldes abgesehen vom aktuell beobachteten von Interesse sein könnten, sofern diese nicht durch eigenes Licht, etwa durch Scheinwerfer eines sich nähernden zweiten Fahrzeugs, das Interesse auf sich ziehen. Wenn in diesem Fall der Fahrer des Ersten Fahrzeugs unwillkürlich auf das sich nähernde zweite blickt, so werden dadurch auch Leuchtmittel des ersten Fahrzeugs auf das zweite gelenkt, und die Gefahr ist hoch, dass der Fahrer des zweiten Fahrzeugs unversehens geblendet wird. Wenn jedoch die möglicherweise blendenden Leuchtmittel ausgeschaltet werden, wird dadurch die Sicht des Fahrers des ersten Fahrzeugs empfindlich beeinträchtigt.

Aufgabe der Erfindung ist, ein Beleuchtungssystem für landwirtschaftliche Fahrzeuge zu schaffen, das ein Höchstmaß an Überblick und Sicherheit für die Fahrer mehrerer zusammenarbeitender Fahrzeuge bietet.

Die Aufgabe wird gelöst, indem bei einem Beleuchtungssystem für landwirtschaftliche Fahrzeuge mit einer Steuereinheit und von der Steuereinheit steuerbaren Leuchtmitteln, von denen sich erste Leuchtmittel an Bord wenigstens eines der landwirtschaftlichen Fahrzeuge, als erstes Fahrzeug bezeichnet, befinden, und die Steuereinheit eingerichtet ist, die Leuchtmittel zu steuern, um ein zur Durchführung einer dem ersten Fahrzeug zugewiesenen Aufgabe angemessenes Umfeld des ersten Fahrzeugs auszuleuchten, das angemessene Umfeld relativ zum ersten Fahrzeug im Wesentlichen stationär ist und die Steuereinheit eingerichtet ist, das Eindringen wenigstens eines anderen landwirtschaftlichen Fahrzeugs, als zweites Fahrzeug bezeichnet, in das Umfeld zu erfassen und die die Ausleuchtung eines Teils des Umfeldes durch die ersten Leuchtmittel so anzupassen, dass eine Blendung an Bord des zweiten Fahrzeugs vermieden wird.

Dass das angemessene Umfeld relativ zum ersten Fahrzeug im Wesentlichen stationär ist, kann dahingehend zu verstehen sein, dass der Teil des Umfeldes, in dem die Ausleuchtung angepasst wird, ein kleiner Teil des gesamten ausgeleuchteten Umfeldes ist, und dass das in dem zu diesem Teil komplementären Rest des Umfeldes eine Anpassung der Ausleuchtung unterbleibt. So kann zum einen sichergestellt werden, dass durch die in dem Teil des Umfeldes erfolgte Anpassung sich das, was der Fahrer des ersten Fahrzeugs von seiner Umgebung sieht, nicht wesentlich ändert; eine Verunsicherung des Fahrers durch ein plötzliches Ausbleiben von Information aus ausgerechnet dem Teil des Umfeldes, in den sein Blick gerichtet ist, wird so vermieden. Auch für einen Fahrer des zweiten Fahrzeugs ist es einfacher, sich dem ersten Fahrzeug im Dunklen zu nähern, wenn sich die Ausleuchtung von dessen Umfeld im Wesentlichen gleichbleibt, als wenn sich die Position eines ausgeleuchteten Teils des Umfelds sich in für ihn nicht vorhersehbarer Weise, anhand einer wechselnden Blickrichtung des Fahrers des ersten Fahrzeugs, ändert.

Einer weiterentwickelten Ausgestaltung zufolge impliziert die Angabe, dass das angemessene Umfeld relativ zum ersten Fahrzeug im Wesentlichen stationär ist, nicht notwendigerweise, dass der Teil des Umfeldes, dessen Ausleuchtung durch die ersten Leuchtmittel angepasst wird, klein im Vergleich zum gesamten von den ersten Leuchtmitteln ausgeleuchteten Umfeld ist. Vielmehr kann dieser Teil im Prinzip beliebig groß sein, wenn zweite Leuchtmittel des zweiten Fahrzeugs durch die Steuereinheit steuerbar sind, um den von den ersten Leuchtmitteln nicht mehr ausgeleuchteten Teil des Umfeldes wenigstens teilweise auszuleuchten und so für eine ununterbrochene Ausleuchtung des gesamten Umfeldes zu sorgen.

Das Anpassen der Ausleuchtung umfasst typischerweise ein Ansteuern der ersten Leuchtmittel derart, dass besagter Teil des Umfeldes von den ersten Leuchtmitteln nicht mehr oder zumindest mit verminderter Lichtstärke ausgeleuchtet wird

In diesem Teil des Umfeldes können sich das zweite Fahrzeug, die Augen eines Fahrers des zweiten Fahrzeugs oder ein in Richtung der Augen des Fahrers reflektierender Spiegel befinden.

Das Ansteuern der Leuchtmittel kann ein Ausschalten oder ein Ausrichten wenigstens eines der ersten Leuchtmittel umfassen. Wenn das anzusteuernde Leuchtmittel ein monolithischer Scheinwerfer ist, kann ein Ausrichten des Scheinwerfers weg von dem besagten Teil des Umfelds gegenüber einem Ausschalten zu bevorzugen sein, um die Größe dieses Teils gering zu halten. Andererseits kann auch bei einem monolithischen Scheinwerfer des ersten Fahrzeugs ein einfaches Ausschalten genügen, wenn ein zweites Leuchtmittel des zweiten Fahrzeugs ausrichtbar ist, um einen Teil des Umfelds auszuleuchten, der sonst durch das Ausschalten des Scheinwerfers dunkel fallen würde. Wenn das erste Leuchtmittel Teil eines Matrixscheinwerfers ist, ist das Ausschalten meist die zweckmäßigere Lösung.

Das erste Fahrzeug kann insbesondere eine erste Erntemaschine sein. Beim zweiten Fahrzeug kann es sich um eine weitere Erntemaschine oder ein Abtankfahrzeug handeln.

Ein bevorzugtes Anwendungsgebiet der Erfindung ist das Fahren des ersten und des zweiten Fahrzeugs in fester örtlicher Beziehung zueinander.

Um eine solche feste örtliche Beziehung einzunehmen oder im Betrieb aufrecht zu erhalten, ist meist ein Blickkontakt zwischen den Fahrern der Fahrzeuge nötig, so dass ohne geeignete Vorbeugungsmaßnahmen die Gefahr einer gegenseitigen Blendung hoch ist.

Die ersten und zweiten Fahrzeuge können Erntefahrzeuge sein, die in Formation fahren, um ein Feld abzuernten, oder ein Erntefahrzeug und ein Abtankfahrzeug, das eine feste örtliche Beziehung zum Erntefahrzeug einhalten muss, um Erntegut von dem Erntefahrzeug während der Fahrt übernehmen zu können.

Wenn Fahrzeuge, die gemeinsam ein Feld bearbeiten, im Vorgewende fahren, ändert sich ihre örtliche Beziehung zueinander laufend, so dass auch hier die Gefahr einer wenigstens kurzzeitigen Blendung hoch ist, sofern nicht geeignete Vorbeugungsmaßnahmen gemäß der Erfindung getroffen werden.

Wenn das zweite Fahrzeug ein Abtankfahrzeug ist, kann das Ansteuern der Leuchtmittel derart, dass eine Blendung an Bord des zweiten Fahrzeugs vermieden wird, auch das Ausleuchten einer Ladefläche oder Ladeöffnung des Abtankfahrzeugs umfassen, um ein sicheres Abtanken zu erleichtern.

Die Aufgabe wird ferner gelöst durch ein Verfahren zum Beleuchten einer Arbeitsfläche für landwirtschaftliche Fahrzeuge, mit den Schritten:
- Festlegen eines zur Durchführung einer einem ersten der Fahrzeug zugewiesenen Aufgabe angemessenen Umfelds des ersten Fahrzeugs, wobei das angemessene Umfeld relativ zum ersten Fahrzeug im Wesentlichen stationär ist;
- Steuern von Leuchtmitteln, von denen sich erste Leuchtmittel an Bord wenigstens eines ersten der Fahrzeuge befinden, um das Umfeld des ersten Fahrzeugs auszuleuchten;
- Erfassen des Eindringens wenigstens eines zweiten Fahrzeugs in das Umfeld;
- Ansteuern der ersten Leuchtmittel so, dass eine Blendung an Bord des zweiten Fahrzeugs vermieden wird.

Gegenstand der Erfindung ist des Weiteren ein Computerprogramm, umfassend von einem Computer ausführbare Instruktionen, deren Ausführung durch einen Computer diesen veranlasst, das oben definierte Verfahren auszuführen.

Weitere Merkmale und Vorteile der Erfindung ergeben sich aus der nachfolgenden Beschreibung von Ausführungsbeispielen unter Bezugnahme auf die beigefügten Figuren. Es zeigen:
Fig. 1 eine schematische Draufsicht auf einen Mähdrescher, derim Kontext eines erfindungsgemäßen Beleuchtungssystems ein erstes Fahrzeug darstellt;
Fig. 2 den Mähdrescher und ein Abtankfahrzeug, das sich als zweites Fahrzeug dem Mähdrescher von hinten nähert;
Fig. 3 den Mähdrescher und das Abtankfahrzeug, das ein Abtankstellung neben dem Mähdrescher erreicht hat; und
Fig. 4 den Mähdrescher und das Abtankfahrzeug während des Abtankens.

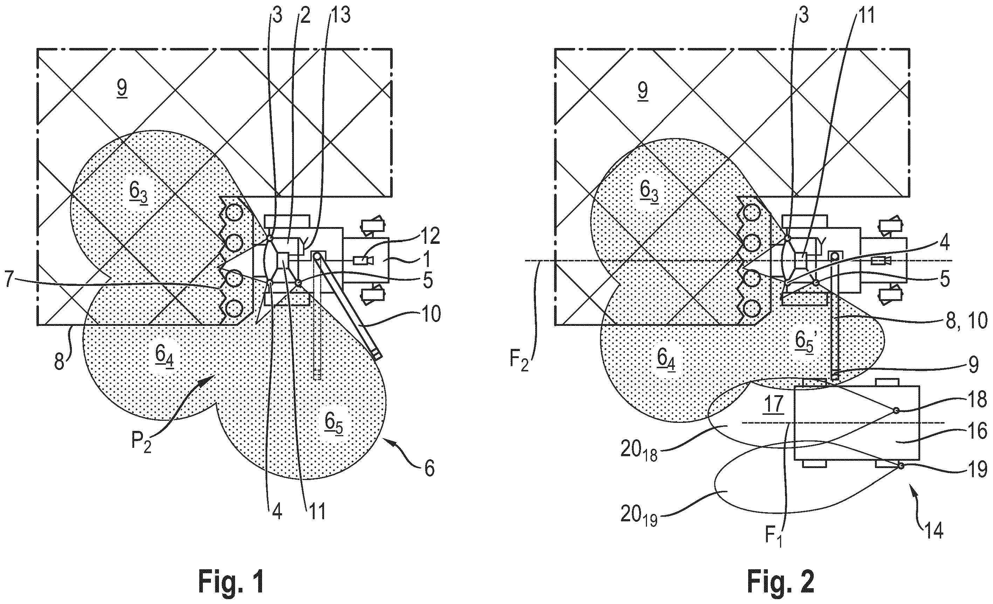

Fig. 1 zeigt einen Mähdrescher 1 beim Abernten einer Ackerfläche. Am Rand eines Dachs 2 einer Fahrerkabine sind Scheinwerfer 3, 4, 5 montiert, die zum Ausleuchten eines Umfelds 6 des Mähdreschers 1 vorgesehen sind. Das Umfeld kann je nach momentaner Verwendung des Mähdreschers 1 unterschiedlich definiert sein, insbesondere kann die Form des ausgeleuchteten Umfelds beim Feldeinsatz des Mähdreschers 1 anders definiert sein, als wenn der Mähdrescher auf einem öffentlichen Verkehrsweg zum Einsatz auf einem Feld gefahren wird. Damit der Mähdrescher 1 beim Feldeinsatz im Dunklen sicher betrieben werden kann, umfasst das Umfeld 6 einen Bereich, der sich vor einer Vorderkante eines Erntevorsatzes 7 des Mähdreschers 1 mindestens über die Breite des Erntevorsatzes 7 und in Fahrtrichtung über eine Länge von ähnlicher Größenordnung erstreckt und hier durch Lichtkegel 63, 64 der an der Vorderkante des Dachs 2 montierten Scheinwerfer 3, 4 gebildet ist, und einen Bereich, der sich entlang wenigstens einer Seitenflanke des Mähdreschers 1 erstreckt und hier durch einen Lichtkegel 65 des an einer hinteren Ecke des Dachs 2 montierten Scheinwerfers 5 gebildet ist. Das Licht der Scheinwerfer 3, 4 ermöglicht dem Fahrer das Navigieren auf dem Feld und das Erkennen einer Kante 8 eines abzuerntenden Pflanzenbestands 9; im Licht des Scheinwerfers 5 kann der Fahrer überprüfen, ob ein Abtankfahrzeug in Bezug auf den Mähdrescher 1 so positioniert ist, dass Erntegut über einen Auswurfkrümmer 10 des Mähdreschers 1 auf das Abtankfahrzeug übergeladen werden kann.

Solange der Mähdrescher 1 für sich allein an der Bestandskante 8 entlangfährt, besteht keine Notwendigkeit, die Ausrichtung oder den Betriebszustand der Scheinwerfer 3-5 zu verändern. Sofern sich die Grenzen der Lichtkegel 63, 64 und 65 am Boden relativ zum Mähdrescher 1 überhaupt verlagern, so ist dies auf Schwankbewegungen des gesamten Mähdreschers 1 zurückzuführen, die durch das Überfahren von Bodenunebenheiten angeregt werden.

In einer Ausgestaltung der Erfindung haben die Scheinwerfer 3-5 eine monolithische Struktur, d.h. jeder Scheinwerfer umfasst ein einziges oder mehrere nur gemeinsam schaltbare Leuchtmittel, und um die Ausbreitungsrichtung des von einem solchen Scheinwerfer emittierten Lichts zu ändern, wird der ganze Scheinwerfer geschwenkt. Die Scheinwerfer 3-5 sind unter der Kontrolle einer Steuereinheit 11 wenigstens um eine horizontale, zu ihrer optischen Achse senkrechte Achse schwenkbar. Die Steuereinheit 11 befindet sich an Bord des Mähdreschers 1. Sie ist mit Mitteln zum Erfassen der Annäherung anderer Fahrzeuge, z.B. einer Kamera 12, verbunden. Sie kann mit einer Funkschnittstelle 13 für die Kommunikation mit anderen Fahrzeugen verbunden sein.

In der in Fig. 2 gezeigten Situation erfasst die Steuereinheit 11, dass sich ein Abtankfahrzeug 14, hier ein Traktor 15 mit Anhänger 16, von hinten nähert, und reagiert darauf, indem sie den Scheinwerfer 5 abwärts schwenkt. Indem dieser so einen verkleinerten und näher an die Flanke des Mähdreschers 1 herangerückten Lichtkegel 65' erzeugt, wird in einem Teil 17 des Umfeldes 6, in das das Abtankfahrzeug 14 hineinfahren wird, die Ausleuchtung reduziert, so dass eine Blendung des Fahrers des Abtankfahrzeugs 14 ausgeschlossen ist.

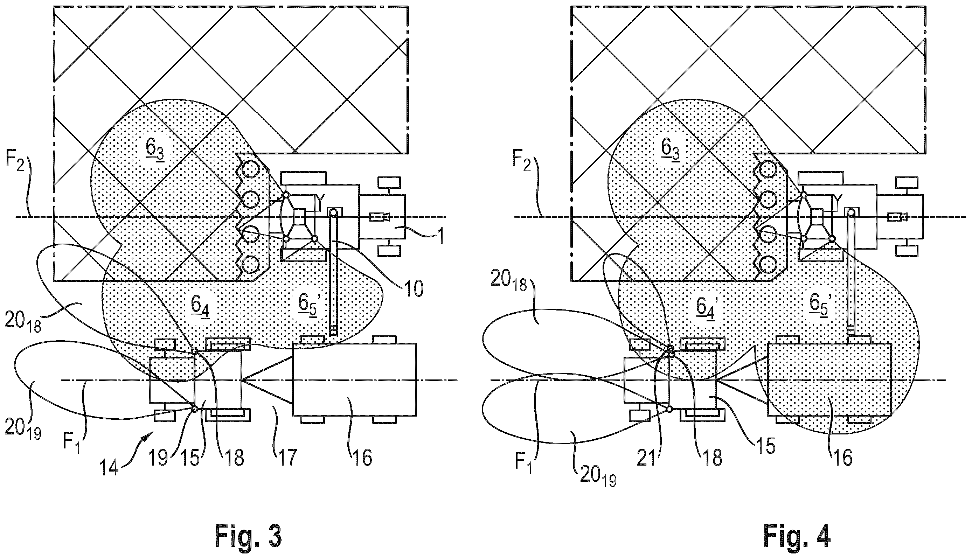

Um das Abtanken von Erntegut auf den Anhänger 16 zu ermöglichen, muss der Traktor 15 auf einer zur Fahrspur F₂ des Mähdreschers 1 parallelen Fahrspur F₁ eine Position knapp vor dem Mähdrescher 1 einnehmen. Um auch in diesem Fall eine Blendung auszuschließen, schwenkt die Steuereinheit 11, wenn sie erfasst, dass der Traktor 15 sich dem Lichtkegel 6₄ nähert, auch den Scheinwerfer 4 abwärts, um einen verkleinerten Lichtkegel 6₄' zu erzeugen, der auch einen Rückspiegel des Traktors 15 nicht mehr erreichen kann. Der Teil 17 des Umfeldes 6, in dem die Ausleuchtung durch die Scheinwerfer 3-5 des Mähdreschers reduziert ist, wird dadurch größer, wie in Fig. 3 gezeigt.

Da der Scheinwerfer 5 nun deutlich hinter dem Traktor 15 liegt, kann er dessen Fahrer nicht mehr blenden; er wird daher in die Stellung der Fig. 1 zurückgeschwenkt, um wie in Fig. 4 gezeigt den Anhänger 16 zu beleuchten und so ein sicheres Abtanken zu ermöglichen.

Alternativ könnten in Fig. 3 und 4 der Scheinwerfer 4 allein oder die Scheinwerfer 3 und 4 azimutal im Uhrzeigersinn geschwenkt werden, um den Teil 17 des Umfelds 6 zu verdunkeln und so eine Blendgefahr für den Fahrer des Traktors zu beseitigen.

Einer bevorzugten Weiterbildung zufolge ist die Steuereinheit 11 eingerichtet, um auch Scheinwerfer 18, 19 des Abtankfahrzeugs 12 zu steuern. Die Scheinwerfer 18, 19 können unter der Kontrolle der Steuereinheit 11 sowohl zenital als auch azimutal schwenkbar und ein/ausschaltbar sein. Wenn sich das Abtankfahrzeug 12 wie in Fig. 2 gezeigt dem Mähdrescher 1 seitlich versetzt von hinten nähert, werden die Scheinwerfer 18, 19 so gesteuert, dass ihre Lichtkegel 20₁₈, 20₁₉ nicht nur wie beim normalen Fahren eine Fläche vor dem Abtankfahrzeug 14 beleuchten, sondern auch den Teil 17 ausfüllen.

In der Darstellung der Fig. 2 ist der Scheinwerfer 18 gegenüber einer beim normalen Fahren eingenommenen Stellung mit zur Fahrtrichtung F₁ paralleler Strahlachse leicht im Uhrzeigersinn geschwenkt, um den Teil 17 möglichst vollständig auszufüllen. In Fig. 3 ist die zum Ausleuchten des Teils 17, soweit es für das Licht des Scheinwerfers 18 überhaupt erreichbar ist, erforderliche Auslenkung des Scheinwerfers 18 noch größer, und auch der Scheinwerfer 19 ist zur Seite geschwenkt, um die in Fahrtrichtung F₁ vor dem Abtankfahrzeug 14 liegende Fläche zu beleuchten.

Alternativ kann ein Hilfsscheinwerfer 21 am Abtankfahrzeug 12 vorgesehen sein, der in der Abtankstellung zugeschaltet wird, um wie in Fig. 4 gezeigt einen in den Teil 15 hinein gerichteten Lichtkegel 18₁₉ zu erzeugen.

Während der Mähdrescher 1 und das Abtankfahrzeug 14 während des Abtankens eine im wesentlichen gleichbleibende Stellung einhalten, ist dies beim Fahren im Vorgewende nicht der Fall; hier fahren beide Fahrzeuge 1, 14 Kurven von unterschiedlichen Radien, um sich gegenseitig nicht beim Wenden zu behindern und dann möglichst bald zueinander die Abtankstellung einzunehmen und einen weiteren Streifen des Bestands 9 zu bearbeiten. Die Verarbeitungsleistung der Steuereinheit 11 sollte daher ausreichen, um die Scheinwerfer 3-5, 18, 19 oder 21 auch beim Fahren im Vorgewende, wenn sich die Stellung der Fahrzeuge 1 und 14 zueinander laufend ändert, schnell genug an diese Stellung anpassen zu können, damit auch im Vorgewende eine Blendung vermieden wird.

Einer alternativen Ausgestaltung können ein oder mehrere der monolithischen Scheinwerfer 3-5, 18, 19 und 21 durch Matrixscheinwerfer ersetzt sein, die jeweils eine Vielzahl von unabhängig voneinander steuerbaren Leuchtmitteln enthalten. Diese Matrixscheinwerfer können fest an dem sie tragenden Fahrzeug 1 oder 14 montiert sein; um die von ihnen erzeugten Lichtkegel wie oben beschrieben zu verändern, genügt es jeweils einzelne geeignet ausgewählte Leuchtmittel der Scheinwerfer ein- und auszuschalten.

### Bezugszeichen

- 1: Mähdrescher
- 2: Dach
- 3: Scheinwerfer
- 4: Scheinwerfer
- 5: Scheinwerfer
- 6: Umfeld
- 6₁, 6₂,...: Lichtkegel
- 7: Erntevorsatz
- 8: Kante
- 9: Bestand
- 10: Auswurfkrümmer
- 11: Steuereinheit
- 12: Kamera
- 13: Funkschnittstelle
- 14: Abtankfahrzeug
- 15: Traktor
- 16: Anhänger
- 17: Teil des Umfeldes
- 18: Scheinwerfer
- 19: Scheinwerfer
- 20₁₈, 20₁₉: Lichtkegel
- 21: Hilfsscheinwerfer

## Patentansprüche

1. Beleuchtungssystem für landwirtschaftliche Fahrzeuge, mit einer Steuereinheit (11) und von der Steuereinheit (11) steuerbaren Leuchtmitteln (3, 4, 5, 18, 19, 21), von denen sich erste Leuchtmittel (3, 4, 5) an Bord wenigstens eines der landwirtschaftlichen Fahrzeuge, als erstes Fahrzeug (1) bezeichnet, befinden, wobei die Steuereinheit (11) eingerichtet ist, die Leuchtmittel (3, 4, 5, 18, 19, 21) zu steuern, um ein zur Durchführung einer dem ersten Fahrzeug zugewiesenen Aufgabe angemessenes Umfeld (6) des ersten Fahrzeugs (1) auszuleuchten, **dadurch gekennzeichnet, dass** das angemessene Umfeld (6) relativ zum ersten Fahrzeug (1) im Wesentlichen stationär ist und die Steuereinheit (11) eingerichtet ist, das Eindringen wenigstens eines anderen landwirtschaftlichen Fahrzeugs, als zweites Fahrzeug (14) bezeichnet, in das Umfeld (6) zu erfassen und die die Ausleuchtung eines Teils (15) des Umfeldes (6) durch die ersten Leuchtmittel (3, 4, 5) so anzupassen, dass eine Blendung an Bord des zweiten Fahrzeugs (14) vermieden wird.

2. Beleuchtungssystem nach Anspruch 1, bei dem das Anpassen der Ausleuchtung ein Ansteuern der ersten Leuchtmittel (3, 4, 5) derart umfasst, dass der Teil (15) des Umfeldes (6), in dem sich das zweite Fahrzeug (14), die Augen eines Fahrers des zweiten Fahrzeugs oder ein in Richtung der Augen des Fahrers reflektierender Spiegel befindet, von den ersten Leuchtmitteln (3, 4, 5) nicht mehr ausgeleuchtet wird.

3. Beleuchtungssystem nach Anspruch 2, ferner mit zweiten Leuchtmitteln (18, 19, 21) an Bord des zweiten Fahrzeugs (14), die durch die Steuereinheit (11) steuerbar sind, um den von den ersten Leuchtmitteln (3, 4, 5) nicht mehr ausgeleuchteten Teil (15) des Umfeldes (6) wenigstens teilweise auszuleuchten.

4. Beleuchtungssystem nach Anspruch 1, 2 oder 3, bei dem das Ansteuern der Leuchtmittel (3, 4, 5, 18, 19, 21) ein Ausschalten oder ein Ausrichten wenigstens eines der ersten Leuchtmittel (3, 4, 5) umfasst.

5. Beleuchtungssystem nach Anspruch 4, bei dem das wenigstens eine der ersten Leuchtmittel (3, 4, 5) einer von mehreren Scheinwerfern (3, 4,5) des ersten Fahrzeugs (1) oder ein Teil eines Matrixscheinwerfers des ersten Fahrzeugs ist.

6. Beleuchtungssystem nach einem der vorhergehenden Ansprüche, bei dem das erste Fahrzeug (1) eine erste Erntemaschine ist und das zweite Fahrzeug (14) eine weitere Erntemaschine oder ein Abtankfahrzeug ist.

7. Beleuchtungssystem nach einem der vorhergehenden Ansprüche, bei dem die zugewiesene Aufgabe das Fahren des ersten und des zweiten Fahrzeugs (1, 14) in fester örtlicher Beziehung zueinander oder das Fahren der Fahrzeuge (1, 14) im Vorgewende umfasst.

8. Beleuchtungssystem nach einem der vorhergehenden Ansprüche, bei dem das zweite Fahrzeug (14) ein Abtankfahrzeug ist und das Ansteuern der Leuchtmittel derart, dass eine Blendung an Bord des zweiten Fahrzeugs (14) vermieden wird, das Ausleuchten einer Ladefläche (16) oder Ladeöffnung des Abtankfahrzeugs (14) umfasst.

9. Erntefahrzeug zur Verwendung als erstes oder zweites Erntefahrzeug (1, 14) eines Beleuchtungssystems nach einem der vorhergehenden Ansprüche, das die Steuereinheit (11) an Bord mitführt.

10. Verfahren zum Beleuchten einer Arbeitsfläche für landwirtschaftliche Fahrzeuge, mit den Schritten:
- Festlegen eines zur Durchführung einer einem ersten der Fahrzeug zugewiesenen Aufgabe angemessenen Umfelds (6) eines ersten Fahrzeugs (1), wobei das angemessene Umfeld (6) relativ zum ersten Fahrzeug (1) im Wesentlichen stationär ist;
- Steuern von Leuchtmitteln (3, 4, 5, 18, 19, 21), von denen sich erste Leuchtmittel (3, 4, 5) an Bord wenigstens eines ersten (1) der Fahrzeuge befinden, um das Umfeld (6) des ersten Fahrzeugs (1) auszuleuchten;
- Erfassen des Eindringens wenigstens eines zweiten Fahrzeugs (14) in das Umfeld (6);
- Ansteuern der ersten Leuchtmittel (3, 4, 5) so, dass eine Blendung an Bord des zweiten Fahrzeugs (14) vermieden wird.
